# EUROPÄISCHE PATENTSCHRIFT

(11) **EP 1 184 267 B1**
(45) Veröffentlichungstag und Bekanntmachung des Hinweises auf die Patenterteilung: **16.08.2006**
(21) Anmeldenummer: 01114441.7
(22) Anmeldetag: 15.06.2001
(51) Int. Cl.: B62D 25/06

(54) **Rahmenstruktur eines Aufbaus für ein Kraftfahrzeug**
Frame stucture for a motor car
Structure de cadre d'un véhicule automobile

(30) Priorität: 30.08.2000 DE 10042410
(43) Veröffentlichungstag der Anmeldung: 06.03.2002
(73) Patentinhaber: Dr.Ing. h.c.F. Porsche Aktiengesellschaft, 70435 Stuttgart (DE)
(72) Erfinder: Schwarz, Hartmut, 75331 Engelsbrand (DE); Shakory-Tabrizi, Reza, 71706 Markgröningen (DE)

(56) Entgegenhaltungen:
- DE-A- 3 204 526
- DE-A- 4 016 730
- US-A- 3 825 297

## Beschreibung

Die Erfindung bezieht sich auf eine Rahmenstruktur eines Aufbaus für ein Kraftfahrzeug, insbesondere einen Personenkraftwagen nach dem Oberbegriff des Patentanspruchs 1.

Ein bekannter Personenkraftwagen der eingangs genannten Gattung US 3,825,297 weist eine Aufbaustruktur mit seitlichen, ein Dach oberhalb einer Gürtellinie in Fahrzeuglängsrichtung überwölbenden Rohrträgern auf. Das aus Leichtmetall oder Kunststoff bestehende Dach ist mit Umformungen für die Rohrträger versehen. Die Umformungen umgeben mit definiertem Abstand die Rohrträger, ohne mit letzteren verbunden zu sein. Darüber hinaus erstreckt sich jeder Rohrträger zwischen einem vorderen und einem hinteren Aufbaubereich. Dieser Ausführung haftet der Nachteil an, dass die Umformungen des Daches und die Rohrträger unabhängig voneinander in die Aufbaustruktur eingesetzt sind, wodurch ihre Steifigkeit reduziert ist, was insbesondere eine Dachkonstruktion mit einem relativ großen Dachausschnitt für feststehende und/oder verschiebbare flächige Glaselemente beeinträchtigen kann.

Die DE 30 46 056 C2 befasst sich mit flächigen Bauteilen für Fahrzeugkarosserien, die mittels Rohren ausgesteift sind. Bei einer Ausführungsform dieser Literaturstelle ist ein Randbereich einer Beplankung mit einem Halter für ein Rohr versehen, welcher Halter mit Haltebügeln das Rohr abschnittsweise umgibt und durch Schweißen, Kleben oder Nieten mit besagtem Rohr verbunden ist. Da der mit dem Rohr verstärkte Halter lediglich am Randbereich mit der Beplankung verbunden ist, ist diese Konstruktion für anspruchsvolle Belastungsfälle allenfalls bedingt geeignet.

Die DE-A 32 04 526 offenbart eine Rahmenstruktur eines Aufbaus für ein Kraftfahrzeug, insbesondere einen Personenkraftwagen, die in Längsrichtung des Kraftfahrzeugs gesehen, zwischen einem vorderen Aufbaubereich und einem hinteren Aufbaubereich verlaufende und einen Fahrgastraum oberhalb einer Gürtellinie überwölbende seitliche, ein Dach begrenzende Trägervorrichtungen besitzt. Jede seitliche Trägervorrichtung umfasst lediglich einen Rohrträger, der durch ein Strangpressprofil aus Leichtmetall gebildet wird. In Teilbereichen ist das Strangpressprofil von einem äußeren Verkleidungsteil umhüllt. Endbereiche es Strangpressprofils sind abgeflacht und über Schraubverbindungen mit einem unteren Aufbaukörper verbunden.

Die DE-A 40 16 730 zeigt eine Tragsäule für ein Kraftfahrzeug, die als säulenartiger Hohlkörper ausgebildet ist. Ein inneres Versteifungsrohr dieser Tragsäule ist lediglich mit einem zwischengeschalteten Auflageprofil verbunden. Endseitige erste und zweite Verstärkungen für das Versteifungsrohr sind nicht vorgesehen.

Aufgabe der Erfindung ist es, seitliche Trägervorrichtungen einer Rahmenstruktur eines Aufbaus, die den Fahrgastraum oberhalb einer Gürtellinie in Fahrzeuglängsrichtung überwölben so zu gestalten, dass sie bei einfacher Herstellung in Verbindung mit der Rahmenstruktur eine hohe Steifigkeit besitzen.

Gemäss der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass der Rohrträger mit der ersten Verstärkung und der zweiten Verstärkung wirkungsvoll in den vorderen und den hinteren Aufbaubereich eingliederbar ist und mit der Trägervorrichtung einen steifen Rahmenverbund bildet, der der Rahmenstruktur insgesamt eine ausgeprägte Festigkeit verleiht. Dabei besteht die Möglichkeit den Querschnitt, bestehend aus Trägervorrichtung und Rohrträger, kompakt bzw. mit geringem Raumanspruch auszubilden, wodurch angrenzende Aufbauelemente, vorzugsweise relativ großflächige bspw. feste und bewegliche Glaselemente einer entsprechenden Glasdachkonstruktion, gezielt ausgelegt werden können. Der Rohrträger und Trägervorrichtung sind Bauteile die mit bekannten technischen Verfahren herstell- und zusammenbaubar sind. Schließlich wird letzteres dadurch unterstützt, dass der Rohrträger, die erste Verstärkung, die zweite Verstärkung und die Halteeinrichtung als vorgefertigtes Modul ausgeführt sind, das mit der Trägervorrichtung auf einfache Weise zusammengefügt werden kann.

In der Zeichnung wird ein Ausführungsbeispiel der Erfindung gezeigt, das nachstehend näher beschrieben ist.

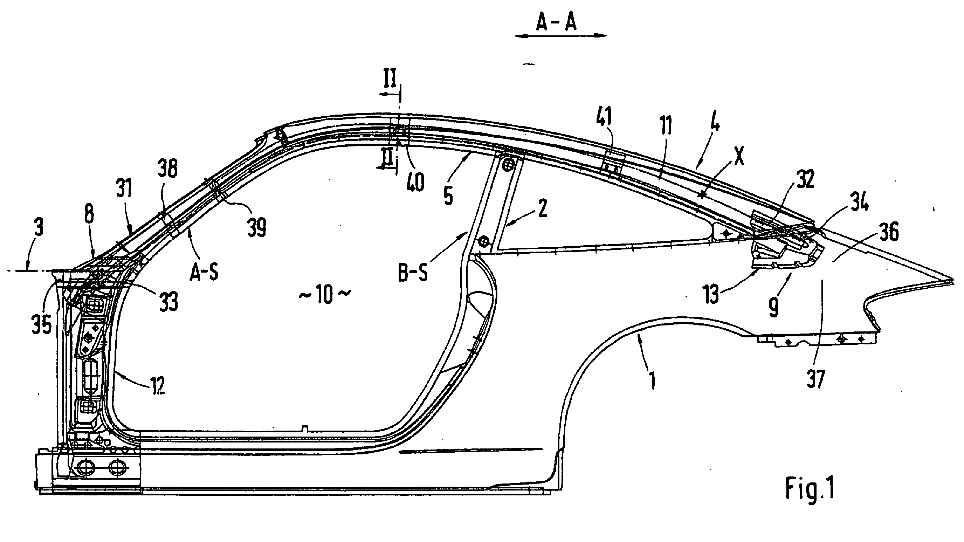

Es zeigen
- Fig. 1: eine Seitenansicht eines Aufbaus eines Personenkraftwagens mit einer Rahmenstruktur nach der Erfindung,
- Fig. 2: einen Schnitt nach der Linie II-II der Fig.1 in größerem Maßstab,
- Fig. 3: eine Schrägansicht einer Einzelheit X der Fig.1.

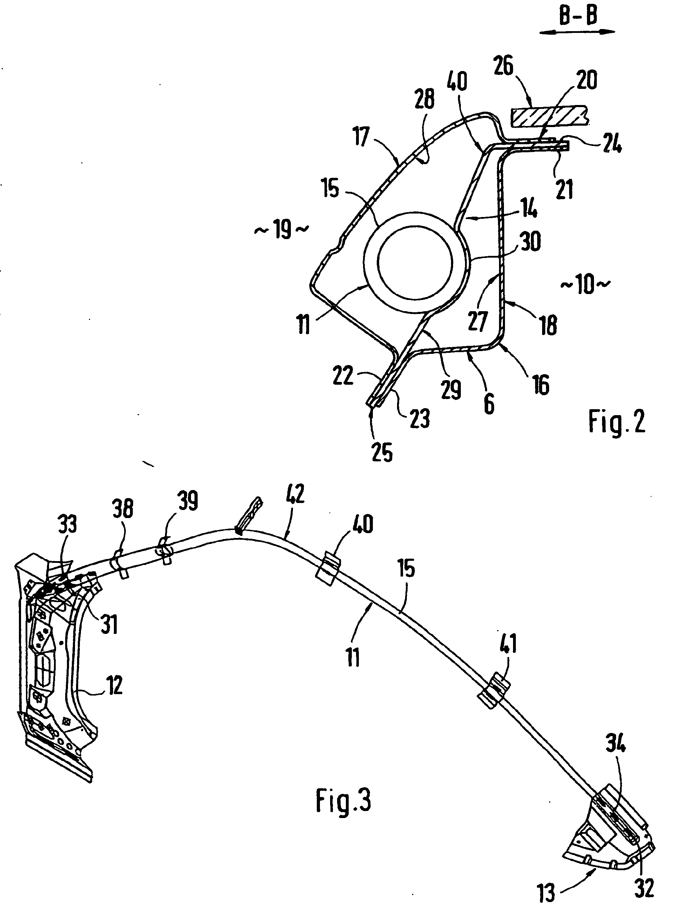

Von einem Personenkraftwagen 1 ist lediglich ein Aufbau 2 dargestellt, der einen Stufenbug 3, ein Fliessheck 4 und eine Rahmenstruktur 5 aufweist. Die Rahmenstruktur 5 besitzt seitliche Trägervorrichtungen 6 - Fig. 2 - d.h. eine linke und eine rechte, wovon jede z.B. die linke Trägervorrichtung 6 oberhalb einer Gürtellinien 7 zwischen einem einer A-Säule A-S benachbarten vorderen Aufbaubereich 8 und einem hinter einer B-Säule B-S liegenden hinteren Aufbaubereich 9 einen Fahrgastraum 10 des Personenkraftwagens 1 in Fahrzeuglängsrichtung A-A überwölbt. Bestandteil der Trägervorrichtung 6 ist ein Rohrträger 11, der zur besonderen Festigkeit der besagten Trägervorrichtung beiträgt.

Der Rohrträger 11 ist mit einer ersten Verstärkung 12 im vorderen Aufbaubereich 8 und einer zweiten Verstärkung 13 im hinteren Aufbaubereich 9 fest verbunden, und er bildet unter Vermittlung einer Halteeinrichtung 14 einen steifen Rahmenverbund mit der Trägervorrichtung 6. Die Halteeinrichtung 14 trägt den Rohrträger 11, der ein Rohr 15 mit kreisförmigem Querschnitt umfasst und bspw. aus hochfestem Stahl besteht. Die Trägervorrichtung 6 wird durch einen Rahmenhohlträger 16 mit einer ersten Hohlträgerschale 17 und einer zweiten Hohlträgerschale 18 gebildet. Die erste Hohlträgerschale 17 ist einer Außenseite 19 und die zweite Hohlträgerschale 18 dem Fahrgastraum 10 des Personenkraftwagens 1 zugekehrt. Darüber hinaus sind die bspw. aus Metall bestehenden Hohlträgerschalen 17 und 18 mit horizontalen Flanschen 20,21 und relativ aufrechten Flanschen 22,23 versehen, wobei zwischen den Flansche 20 und 21 sowie 22 und 23 weitere Flansche 24 und 25 der Halteeinrichtung 14 vorgesehen sind. An den Flanschen 20,21 und 24 sowie 22,23 und 25 sind die Hohlträgerschalen 17,18 und die Halteeinrichtung z.B. durch Punktschweißen miteinander verbunden. Oberhalb der horizontalen Flansche 20,21 ist ein flächiges Aufbauelement 26 aus Glas angeordnet, das in Fahrzeugquerrichtung B-B relativ breit ist, um die freie Sicht nach oben für die Insassen des Personenkraftwagens zu optimieren. Dies hat zur Folge, dass die Trägervorrichtung 6 in Fahrzeugquerrichtung relativ schmal ist.

Die Halteeinrichtung 14 weist innerhalb der Trägervorrichtung 6 einen solchen Verlauf zwischen den Flanschen 20,21 und 22,23 auf, dass sich zwei Zusatzhohlträger 27,28 ergeben. Die Zusatzhohlträger 27,28 verleihen der Trägervorrichtung 6 in Verbindung mit dem Rohrträger 11 eine Steifigkeit, die definierten Belastungsfällen standhält. Zur funktionsgerechten Verbindung der Halteeinrichtung 14 mit dem Rohrträger 11 ist ein gerader Wandabschnitt 29 dieser Halteeinrichtung mit einem das Rohr bereichsweise umgebenden Aufnahme 30 versehen.

Die erste Verstärkung 12, die mit einem Endbereich 31 des Rohrträgers 11 durch geeignete Verfahren z.B. Schweißen verbunden ist, ist ein Pressteil aus Metall mit seine Festigkeit erhöhenden Verformungen. Ähnlich ist die Verstärkung 13 ausgeführt, die an einen Endbereich 32 des Rohrträgers angeschlossen ist. Beide Verstärkungen 12 und 13 sind mit Aufnahmen 33 sowie 34 für die Endbereiche 31 und 32 des Rohrträgers versehen und mit feststehenden Aufbauteilen 35 und 36 der Rahmenstruktur 5 baulich vereinigt, die an einer Innenseite 37 des Aufbaus 2 verlaufen.

Die Halteeinrichtung 14 wird im Ausführungsbeispiel durch mehrere einzelne kurze Halter 38,39,40 und 41 gebildet, die über die Länge des Rohrträgers 11 verteilt in die Trägervorrichtung 6 integriert sind. Denkbar ist jedoch auch zwischen der vorderen Verstärkung 12 und der hinteren Verstärkung 13 eine durchgehende als Pressteil ausgestaltete Halteeinrichtung vorzusehen.

Schließlich sind der Rohrträger 11, die Verstärkungen 12,13 und die Halteeinrichtung 14 zu einem vorgefertigten Modul 42 - Fig. 3 - zusammengefasst, das bei der Fertigung des Aufbaus 2 mit den entsprechenden Komponente verbunden wird.

## Patentansprüche

1. Rahmenstruktur (5) eines Aufbaus (2) für ein Kraftfahrzeug, insbesondere einen Personenkraftwagen (1), die in Längsrichtung des Kraftfahrzeugs gesehen zwischen einem vorderen Aufbaubereich (8) und einem hinteren Aufbaubereich (9) verlaufende und einen Fahrgastraum (10) oberhalb einer Gürtellinie (7) überwölbende seitliche, ein Dach begrenzende Trägervorrichtungen (6) besitzt, wobei jede Trägervorrichtung (6) einen Rohrträger (11) umfasst, **dadurch gekennzeichnet, dass** der Rohrträger (11) in einem Endbereich (31) mit einer ersten Verstärkung (12) im vorderen Aufbaubereich (8) sowie in einem Endbereich (32) mit einer zweiten Verstärkung (13) im hinteren Aufbaubereich (9) verbunden ist und der Rohrträger (11) unter Vermittlung von einer Halteeinrichtung (14) einen steifen Rahmenverbund mit der Trägervorrichtung (6) bildet und die Trägervorrichtung (6) durch einen Rahmenhohlträger (16), bestehend aus einer ersten Hohlträgerschale (17) und einer zweiten Hohlträgerschale (18), gebildet wird, wobei der Rahmenhohlträger (16) vermittels dem Rohrträger (11) und der Halteeinrichtung (14) versteift ist, dass die erste Verstärkung (12) und die zweite Verstärkung (13) Aufnahmen (33, 34) für den Rohrträger (11) aufweisen, welche Aufnahmen (33, 34) mit Endbereichen (31, 32) des Rohrträgers (11) fest verbunden sind, dass die erste Verstärkung (13) und die zweite Verstärkung (14) an einer Innenseite (37) des Aufbaus (2) befestigt sind und dass der Rohrträger (11), die erste Verstärkung (12), die zweite Verstärkung (13) und die Halteeinrichtung (14) als vorgefertigtes Modul (42) ausgeführt sind.

2. Rahmenstruktur nach Anspruch 1, **dadurch gekennzeichnet, dass** die Halteeinrichtung (14) mit dem Rahmenhohlträger (16) eine Art Zusatzhohlträger (27, 28) bildet.

3. Rahmenstruktur nach den Ansprüchen 1 und 2, **dadurch gekennzeichnet, dass** die Zusatzhohlträger (27, 28) durch den Verlauf der Halteeinrichtung (14) zwischen den beiden Hohlträgerschalen (17, 18) gebildet wird.

4. Rahmenstruktur nach Anspruch 3, **dadurch gekennzeichnet, dass** die Halteeinrichtung (14) mit Flanschen (24, 25) zwischen Flanschen (20, 21 und 22, 23) der Hohlträgerschale (17, 18) angeordnet ist.

5. Rahmenstruktur nach Anspruch 1, **dadurch gekennzeichnet, dass** die Halteeinrichtung (14) eine den Rohrträger (11) bereichsweise umgebende Aufnahme (30) aufweist.

6. Rahmenstruktur nach Anspruch 5, **dadurch gekennzeichnet, dass** der Rohrträger (11) ein Rohr (15) mit kreisförmigem Querschnitt umfasst, an das die Aufnahme (30) angepasst ist.

7. Rahmenstruktur nach Anspruch 6, **dadurch gekennzeichnet, dass** das Rohr (15) aus hochfestem Stahl besteht.

8. Rahmenstruktur nach einem oder mehreren der vorangehenden Ansprüche **dadurch gekennzeichnet, dass** die erste Hohlträgerschale (17) zur Außenseite (19) des Kraftfahrzeugs und die zweite Hohlträgerschale (18) zu einem Fahrgastraum (10) hin ausgerichtet sind.

9. Rahmenstruktur nach Anspruch 1, **dadurch gekennzeichnet, dass** die Halteeinrichtung (14) mehrere über die Länge des Rohrträgers (11) verteilte Halter (37, 38, 39, 40, 41) umfasst.

## Claims

1. A frame structure (5) of a body (2) for a motor vehicle, in particular a passenger car (1), which comprises lateral support devices (6) which extend between a front body region (8) and a rear body region (9) as viewed in the longitudinal direction of the motor vehicle and which overarch a passenger compartment (10) above a waist line (7) and bound a roof, wherein each support device (6) comprises a tubular support (11), **characterized in that** the tubular support (11) is connected in an end region (31) to a first reinforcement (12) in the front body region (8) and in an end region (32) to a second reinforcement (13) in the rear body region (9), and the tubular support (11) forms a rigid frame unit with the support device (6) with the interposition of a holding device (14), and the support device (6) is formed by a hollow frame support (16) comprising a first hollow-support shell (17) and a second hollow-support shell (18), wherein the hollow frame support (16) is reinforced by means of the tubular support (11) and the holding device (14), the first reinforcement (12) and the second reinforcement (13) have receiving means (33, 34) for the tubular support (11), which receiving means (33, 34) are connected to end regions (31, 32) of the tubular support (11) in a fixed manner, the first reinforcement (13) [*sic - recte* (12)] and the second reinforcement (14) [*sic - recte* (13)] are fastened to an inner side (37) of the body (2), and the tubular support (11), the first reinforcement (12), the second reinforcement (13) and the holding device (14) are constructed in the form of a pre-fabricated module (42).

2. A frame structure according to Claim 1, **characterized in that** the holding device (14) forms a sort of additional hollow support (27, 28) with the hollow frame support (16).

3. A frame structure according to Claims 1 and 2, **characterized in that** the additional hollow supports (27, 28) are formed by the shape of the holding device (14) between the two hollow-support shells (17, 18).

4. A frame structure according to Claim 3, **characterized in that** the holding device (14) is arranged with flanges (24, 25) between flanges (20, 21 and 22, 23) of the hollow-support shell (17, 18).

5. A frame structure according to Claim 1, **characterized in that** the holding device (14) has a receiving means (30) which surrounds the tubular support (11) locally.

6. A frame structure according to Claim 5, **characterized in that** the tubular support (11) comprises a tube (15) with a circular cross-section to which the receiving means (30) is adapted.

7. A frame structure according to Claim 6, **characterized in that** the tube (15) consists of high-strength steel.

8. A frame structure according to one or more of the preceding Claims, **characterized in that** the first hollow-support shell (17) is orientated towards the outside (19) of the motor vehicle and the second hollow-support shell (18) is orientated towards a passenger compartment (10).

9. A frame structure according to Claim 1, **characterized in that** the holding device (14) comprises a plurality of holding means (37, 38, 39, 40, 41) distributed over the length of the tubular support (11).

## Revendications

1. Structure de cadre (5) de la carrosserie (2) d'un véhicule, en particulier d'une voiture de tourisme (1), qui, vue dans la direction longitudinale du véhicule automobile, possède des dispositifs de support (6) s'étendant entre une zone de carrosserie avant (8) et une zone de carrosserie arrière (9) surmontant un habitacle (10) au-dessus d'une ligne médiane (7) et délimitant un toit, chaque dispositif de support (6) comprenant un support tubulaire (11), **caractérisée en ce que** le support tubulaire (11) est relié, dans une zone d'extrémité (31), à un premier renfort (12) dans la zone de carrosserie (8) ainsi que, dans une zone d'extrémité (32), à un deuxième renfort (13) dans la zone de carrosserie arrière (9), et le support tubulaire (11) forme, par l'intermédiaire d'un dispositif de maintien (14), un assemblage de cadre rigide avec le dispositif de support (6), et le dispositif de support (6) est formé par une poutre creuse de cadre (16), constituée d'une première coque de poutre creuse (17) et d'une deuxième coque de poutre creuse (18), la poutre creuse de cadre (16) étant rigidifiée au moyen du support tubulaire (11) et du dispositif de maintien (14), **en ce que** le premier renfort (12) et le deuxième renfort (13) présentent des logements (33, 34) pour le support tubulaire (11), lesquels logements (33, 34) sont solidaires de zones d'extrémité (31, 32) du support tubulaire (11), **en ce que** le premier renfort (13) et le deuxième renfort (14) sont fixés sur une face intérieure (37) de la carrosserie (2) et **en ce que** le support tubulaire (11), le premier renfort (12), le premier renfort (13) et le dispositif de maintien (14) sont réalisés sous la forme d'un module (42) préfabriqué.

2. Structure de cadre selon la revendication 1, **caractérisée en ce que** le dispositif de maintien (14) forme avec la poutre creuse de cadre (16) une sorte de poutre creuse supplémentaire (27, 28).

3. Structure de cadre selon les revendications 1 et 2, **caractérisée en ce que** les poutres creuses supplémentaires (27, 28) sont formées par l'allure du dispositif de maintien (14) entre les deux coques de poutre creuse (17, 18).

4. Structure de cadre selon la revendication 3, **caractérisée en ce que** le dispositif de maintien (14) est disposé par des brides (24, 25) entre des brides (20, 21 et 22, 23) de la coque de poutre creuse (17, 18).

5. Structure de cadre selon la revendication 1, **caractérisée en ce que** le dispositif de maintien (14) présente un logement (30) entourant par endroits le support tubulaire (11).

6. Structure de cadre selon la revendication 5, **caractérisée en ce que** le support tubulaire (11) comprend un tube (15) de section circulaire auquel est adapté le logement (30).

7. Structure de cadre selon la revendication 6, **caractérisée en ce que** le tube (15) est constitué d'un acier très résistant.

8. Structure de cadre selon une ou plusieurs des revendications précédentes, **caractérisée en ce que** la première coque de poutre creuse (17) est orientée vers le côté extérieur (19) du véhicule automobile et la deuxième coque de poutre creuse (18) vers un habitacle (10).

9. Structure de cadre selon la revendication 1, **caractérisée en ce que** le dispositif de maintien (14) comprend plusieurs organes de maintien (37, 38, 39, 40, 41) répartis sur la longueur du support tubulaire (11).
